# EUROPEAN PATENT APPLICATION

(11) **EP 4 800 648 A1**
(43) Date of publication of application: **02.09.2026**
(21) Application number: 24882898.0
(22) Date of filing: 25.10.2024
(51) Int. Cl.: G06T 7/593, G06T 17/00, G06T 15/06, G06T 15/04, G06T 15/20, G06T 15/08

(54) **ARTIFICIAL INTELLIGENCE DEVICE AND METHOD FOR OPERATING SAME**

(30) Priority: 26.10.2023 KR 20230144905
(71) Applicant: LG Electronics Inc., Yeongdeungpo-gu Seoul 07336 (KR)
(72) Inventor: DO, Mirae, Seoul 06772 (KR); PARK, Minyoung, Seoul 06772 (KR); KIM, Joongrock, Seoul 06772 (KR); SHIN, Yeonjae, Seoul 06772 (KR); HONG, Jongkwang, Seoul 06772 (KR); YOO, Jaeseok, Seoul 06772 (KR); LEE, Hyunchul, Seoul 06772 (KR)
(74) Representative: Vossius & Partner Patentanwälte Rechtsanwälte mbB
(86) International application number: PCT/KR2024/016406
(87) International publication number: WO 2025/089872

(57) **Abstract**

The present disclosure relates to an artificial intelligence device and a method for operating same. The artificial intelligence device according to an embodiment of the present disclosure comprises: a memory that stores a learning model; and a processor that trains the learning model, wherein the processor calculates, by using a predetermined learning model, a color value, a signed distance function (SDF) value, and an object surface field (OSF) value for a plurality of sampling points included in a predetermined space corresponding to a multi-view image on the basis of at least one of positions and directions of the plurality of sampling points, performs first learning on a layout of the predetermined space of the predetermined learning model on the basis of the color value and the SDF value, performs second learning on an object included in the predetermined space of the predetermined learning model on the basis of the SDF value and the OSF value, and reconstructs the predetermined space in three dimensions on the basis of the predetermined learning model, wherein the SDF value may correspond to the shortest distance from a predetermined sampling point to a surface of an object included in the predetermined space, and the OSF value may correspond to the probability that the predetermined sampling point corresponds to a surface of an object included in the predetermined space.

## Description

### [Technical Field]

The present disclosure relates to an artificial intelligence device and a method for operating the same, and more particularly, to an artificial intelligence device that can reconstruct a three-dimensional indoor space by using a multi-view image, and a method for operating the same.

### [Background Art]

Artificial intelligence is a field of computer science and information technology that study methods to enable computers to perform thinking, learning, and self-development that can be achieved with human intelligence, and refers to the ability of a computer to mimic human intelligent behavior.

Furthermore, artificial intelligence does not exist in isolation but is directly and indirectly related to many other fields of computer science. In particular, in modern times, there are very active attempts to introduce artificial intelligence elements into various fields of information technology and utilize them to solve problems in those fields.

Recently, in the fields of computer science and graphics, various studies utilizing artificial intelligence have been conducted in relation to reconstructing the geometry and shape of three-dimensional space by using a multi-view image taken from different directions. For example, various methods using Neural Radiance Fields (NeRF), Signed Distance Fields (SDF), and Occupancy Field have been considered for the reconstruction of three-dimensional space.

Meanwhile, although the performance and quality of reconstruction of three-dimensional space have been improved through research on various methods of utilizing artificial intelligence, limitations in terms of performance and quality are still evident. For example, NeRF has the problem of being difficult to accurately capture the geometry of an object due to a lack of constraint between radiance and geometry. In addition, in case of a method such as SDF and Occupancy Fields, there exists a problem that performance and quality are significantly degraded in an indoor space that considerably contains a low-frequency area, such as wall, ceiling, and floor, that has a minimal change.

Recently, various studies have been conducted to improve low-frequency area by integrating geometric cues containing various prior provided by a pre-trained model. However, due to the inherent properties of neural networks, low-frequency area tends to converge more rapidly than a complex multi-object surface characterized by high-frequency area. In addition, since there is a problem of vanishing gradient that a gradient becomes very small as it moves away from an output layer during a backpropagation process, it is difficult to recover a multi-object surface.

### [Disclosure]

### [Technical Problem]

An object of the present disclosure is to solve the aforementioned problems and other problems.

Another object of the present disclosure is to provide an artificial intelligence device that can accurately reconstruct a three-dimensional indoor space through a process consisting of a first step of learning the layout of an indoor space and a second step of learning an individual object, and a method for operating the same.

Another object of the present disclosure is to provide an artificial intelligence device that can improve the accuracy of the learning at the first step by using normal uncertainty, and a method for operating the same.

Another object of the present disclosure is to provide an artificial intelligence device that can resolve the problem of vanishing gradient by using an Object Surface Field (OSF), and a method for operating the same.

### [Technical Solution]

According to an aspect of the present disclosure for achieving the above or other objects, an artificial intelligence device includes: a memory which stores a learning model; and a processor which trains the learning model, wherein the processor calculates, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points, performs a first learning on a layout of the certain space of the certain learning model, on the basis of the color value and the SDF value, performs a second learning on an object included in the certain space of the certain learning model, on the basis of the SDF value and the OSF value, and reconstructs the certain space in three dimensions, on the basis of the certain learning model, wherein the SDF value corresponds to a shortest distance from a certain sampling point to a surface of an object included in the certain space, and the OSF value corresponds to a probability that the certain sampling point corresponds to the surface of an object included in the certain space.

According to an aspect of the present disclosure for achieving the above or other objects, a method of operating an artificial intelligence device includes: a data calculation operation of calculating, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points; a first learning operation of performing a learning on a layout of the certain space of the certain learning model, on the basis of the color value and the SDF value; a second learning operation of performing a learning on an object included in the certain space of the certain learning model, on the basis of the SDF value and the OSF value; and an operation of reconstructing the certain space in three dimensions, on the basis of the certain learning model, wherein the SDF value corresponds to a shortest distance from a certain sampling point to a surface of an object included in the certain space, and the OSF value corresponds to a probability that the certain sampling point corresponds to the surface of an object included in the certain space.

Specific details of other embodiments are included in the detailed description and drawings.

### [Advantageous Effects]

According to various embodiments of the present disclosure, a three-dimensional indoor space can be accurately reconstructed through a process consisting of a first step of learning the layout of an indoor space and a second step of learning an individual object

In addition, according to various embodiments of the present disclosure, the accuracy of the learning at the first step can be improved by using normal uncertainty.

In addition, according to various embodiments of the present disclosure, the problem of vanishing gradient can be resolved by using an Object Surface Field (OSF).

Further scope of the applicability of the present disclosure will become apparent from the following detailed description. However, since various changes and modifications within the concept and scope of the present disclosure are clearly understood by those skilled in the art, specific embodiments such as the detailed description and preferred embodiments of the present disclosure should be understood as being given merely as examples.

### [Description of Drawings]

FIG. 1 is a block diagram of an artificial intelligence device, according to an embodiment of the present disclosure.
FIG. 2 is a block diagram of an artificial intelligence server, according to an embodiment of the present invention.
FIG. 3 is a diagram illustrating a system according to an embodiment of the present disclosure.
FIGS. 4 to 9 are diagrams for explaining a neural network model of an artificial intelligence device, according to an embodiment of the present disclosure.
FIG. 10 and FIG. 11 are diagrams for explaining the result of reconstructing a three-dimensional indoor space of a neural network model of an artificial intelligence device, according to an embodiment of the present disclosure.
FIGS. 12 to 14 are flowcharts illustrating a method of operating an artificial intelligence device, according to an embodiment of the present disclosure.

### [Mode for Invention]

The present disclosure is described in detail below with reference to the drawings. In the drawings, parts unrelated to the description have been omitted to provide a clear and concise explanation of the present disclosure, and the same reference numerals are used for identical or extremely similar parts throughout the specification.

The suffixes such as "module" and "unit" may be used to refer to elements or components. Use of such suffixes herein is merely intended to facilitate description of the specification, and the suffixes do not have any special meaning or function. Therefore, the terms "module" and ""unit" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

It will be understood that although the terms first, second, etc. may be used herein to describe various elements, these elements should not be limited by these terms. These terms are only used to distinguish one element from another.

In addition, throughout this specification, neural network, neural network, and network function may be used interchangeably. A neural network may consist of a set of interconnected computational units which may generally be referred to as "node". These "nodes" may also be referred to as "neurons". A neural network is composed of at least two nodes. The nodes (or neurons) constituting neural networks may be interconnected by one or more "link".

Artificial intelligence (AI) refers to the field of researching a man-made intelligence or a methodology capable of creating it, and machine learning refers to the field of researching a methodology for defining and solving various problems addressed in the field of artificial intelligence. Machine learning is also defined as an algorithm that improves its performance on a given task through continuous experience on the task.

An Artificial Neural Network (ANN) is a model used in machine learning, and may refer to a general problem-solving model composed of artificial neurons (nodes) that form a network through the combination of synapses. An Artificial Neural Network can be defined by a connection pattern between neurons in different layers, a learning process that updates model parameter, and an Activation Function that generates an output value.

An Artificial Neural Network may include an Input Layer, an Output Layer, and optionally one or more Hidden Layers. Each layer contains one or more neurons, and the Artificial Neural Network may include a synapse that connects the neurons. In an Artificial Neural Network, each neuron can output the function value of Activation Function for the input signals, a weight, and a bias input through the synapse.

Model parameter refers to a parameter determined through learning, and may include the weight of synaptic connection and the bias of neuron. In addition, hyper-parameter refers to a parameter that must be set before learning in a machine learning algorithm, and may include the learning rate, the number of iterations, the mini-batch size, and the initialization function.

The goal of learning an artificial neural network can be seen as determining a model parameter that minimizes a loss function. The loss function can be used as an indicator to determine an optimal model parameter during the learning process of an artificial neural network.

Machine learning can be classified into a supervised learning, an unsupervised learning, and a reinforcement learning depending on a learning method.

Supervised learning refers to a method of training an artificial neural network with a label given for the learning data. A label may refer to a correct answer (or result value) that the artificial neural network must infer when learning data is input into the artificial neural network. Unsupervised learning may refer to a method of training an artificial neural network without providing a label for the learning data. Reinforcement learning may refer to a learning method in which an agent defined within a certain environment is trained to select an action or sequence of actions that maximizes the cumulative reward in each state.

Among artificial neural networks, machine learning implemented by a Deep Neural Network (DNN) containing multiple hidden layers is also called Deep Learning, and Deep Learning is a part of Machine Learning. Hereinafter, Machine Learning is used to include Deep Learning.

Extended Reality (XR) is a collective term for Virtual Reality (VR), Augmented Reality (AR), and Mixed Reality (MR). VR technology provides a real-world object or background solely as a CG image, AR technology provides a virtual CG image superimposed on a real-world object image, and MR technology is a computer graphic technology that mixes and combines virtual objects with a real world.

MR technology is similar to AR technology in that it displays real-world objects and virtual objects together. However, there is a difference in that while in AR technology, virtual objects are used to complement real-world objects, and in MR technology, virtual objects and real-world objects are used on an equal level.

XR technology can be applied to Head-Mount Display (HMD), Head-Up Display (HUD), mobile phone, tablet PC, laptop, desktop, TV, digital signage, etc., and a device to which XR technology is applied can be called an XR device.

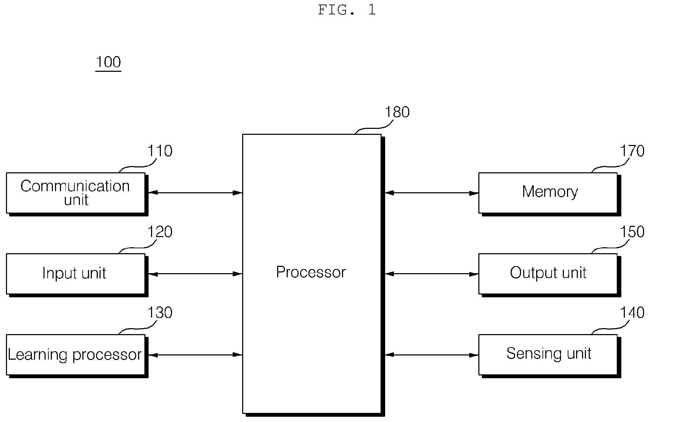

FIG. 1 shows an artificial intelligence device according to an embodiment of the present disclosure.

An artificial intelligence device may be implemented as a stationary device or a mobile device, such as TV, projector, mobile phone, smartphone, desktop computer, laptop, digital broadcasting terminal, personal digital assistants (PDA), portable multimedia player (PMP), navigation device, tablet PC, wearable device, set-top box (STB), DMB receiver, radio, washing machine, refrigerator, desktop computer, digital signage, robot, vehicle, etc. Hereinafter, the artificial intelligence device may be referred to as an AI device 100.

Referring to FIG. 1, the AI device 100 may include a communication unit 110, an input unit 120, a learning processor 130, a sensing unit 140, an output unit 150, a memory 170, and a processor 180, etc.

The communication unit 110 may transmit and receive data with external devices, such as other AI devices 100a to 100e or an AI server 200, by using wired or wireless communication technology. For example, the communication unit 110 may transmit and receive sensor information, user input, learning model, control signals, etc., with external devices.

At this time, the communication technology used by the communication unit 110 include Global System for Mobile communication (GSM), Code Division Multi Access (CDMA), Long Term Evolution (LTE), 5G, Wireless LAN (WLAN), Wireless-Fidelity (Wi-Fi), Bluetooth, Radio Frequency Identification (RFID), Infrared Data Association (IrDA), ZigBee, Near Field Communication (NFC), etc.

The input unit 120 may obtain various types of data.

At this time, the input unit 120 may include a camera for inputting video signals, a microphone for receiving audio signals, and a user input unit for receiving information from a user. Here, the camera or microphone may be treated as a sensor, and the signal obtained from the camera or microphone may be referred to as sensing data or sensor information.

The input unit 120 may obtain learning data for model learning, as well as input data to be used when obtaining output by using a learning model. The input unit 120 may obtain unprocessed input data, and in this case, a processor 180 or a learning processor 130 may extract input feature as a preprocessing step for the input data.

The learning processor 130 may train a model composed of an artificial neural network by using learning data. Here, the trained artificial neural network may be referred to as a learning model. The learning model may be used to infer a result value for new input data other than the learning data, and the inferred values can be used as a basis for determination to perform certain actions.

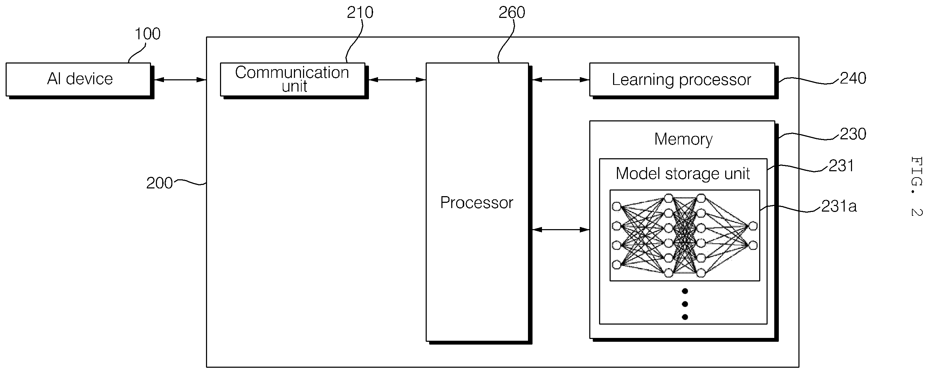

At this time, the learning processor 130 may perform AI processing together with a learning processor 240 of the AI server 200 of FIG. 2.

At this time, the learning processor 130 may include memory integrated or implemented in the AI device 100. Alternatively, the learning processor 130 may be implemented by using memory 170, external memory directly coupled to the AI device 100, or memory maintained in an external device.

The sensing unit 140 may obtain at least one of internal information of the AI device 100, surrounding environment information of the AI device 100, and user information by using various sensors.

At this time, the sensor included in the sensing unit 140 may include a proximity sensor, an illuminance sensor, an accelerometer, a magnetic sensor, a gyro sensor, an inertial sensor, an RGB sensor, an IR sensor, a fingerprint recognition sensor, an ultrasonic sensor, a light sensor, a microphone, a lidar, a radar, etc.

The output unit 150 may generate an output related to sight, hearing, or touch.

At this time, the output unit 150 may include a display unit that outputs visual information, a speaker that outputs auditory information, a haptic module that outputs tactile information, etc.

The memory 170 may store data that supports various functions of the AI device 100. For example, the memory 170 may store input data, learning data, learning model, learning history, etc., obtained from the input unit 120.

The processor 180 may determine at least one executable operation of the AI device 100, on the basis of information determined or generated by using a data analysis algorithm or a machine learning algorithm. The processor 180 may perform the determined operation by controlling the components of the AI device 100.

To this end, the processor 180 may request, search, receive, or utilize data from the learning processor 130 or the memory 170, and may control the components of the AI device 100 to execute a predicted operation or an operation determined to be desirable among the at least one executable operation.

At this time, if the processor 180 requires the connection of an external device so as to perform the determined operation, it may generate a control signal to control a corresponding external device and transmit the generated control signal to a corresponding external device.

The processor 180 may obtain intent information with respect to user input, and determine the user's requirements on the basis of the obtained intent information.

At this time, the processor 180 may obtain intent information corresponding to a user input, by using at least one of a Speech To Text (STT) engine for converting voice input into a string and a Natural Language Processing (NLP) engine for obtaining intent information of natural language.

At this time, at least one of the STT engine and the NLP engine may be composed of an artificial neural network in which at least a portion is trained according to a machine learning algorithm. In addition, at least one of the STT engine and the NLP engine may be trained by the learning processor 130, trained by the learning processor 240 of the AI server 200, or trained through their distributed processing.

The processor 180 may collect history information including the operation details of the AI device 100 or user feedback regarding the operation, and store the information in memory 170 or learning processor 130, or transmit the information to an external device such as the AI server 200. The collected history information may be used to update the learning model.

The processor 180 may control at least some of the components of the AI device 100 to drive an application stored in memory 170. Furthermore, the processor 180 may combine two or more of the components included in the AI device 100 so as to drive the application.

FIG. 2 shows the AI server 200 according to an embodiment of the present disclosure.

Referring to FIG. 2, the AI server 200 may refer to a device that trains an artificial neural network by using a machine learning algorithm or uses a trained artificial neural network. Here, the AI server 200 may be composed of multiple servers to perform distributed processing, or may be defined as a 5G network. At this time, the AI server 200 may be included as part of the configuration of the AI device 100, and may perform at least part of the AI processing together.

The AI server 200 may include a communication unit 210, memory 230, a learning processor 240, and a processor 260, etc.

The communication unit 210 may transmit and receive data with an external device such as the AI device 100.

The memory 230 may include a model storage unit 231. The model storage unit 231 may store a model 231a (or artificial neural network) that is being trained or has been trained through the learning processor 240.

The learning processor 240 may train an artificial neural network 231a by using learning data. The learning model may be used while mounted on the AI server 200 of the artificial neural network, or may be used while mounted on an external device such as the AI device 100.

The learning model may be implemented in hardware, software, or a combination of hardware and software. If part or all of the learning model is implemented in software, one or more instructions constituting the learning model may be stored in the memory 230.

The processor 260 may infer a result value for new input data by using the learning model, and generate a response or control command based on the inferred result value.

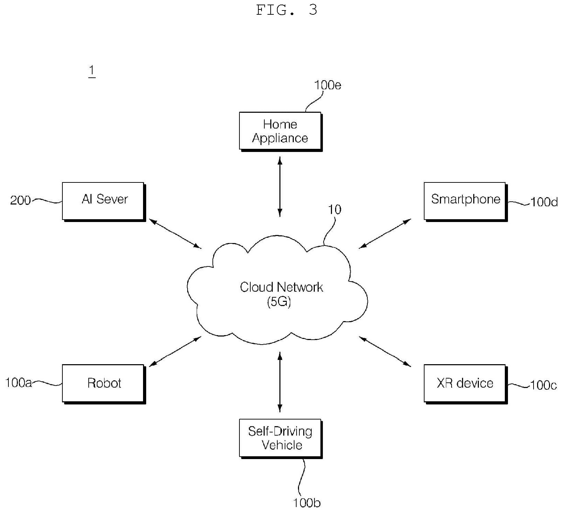

FIG. 3 shows an AI system 1 according to an embodiment of the present disclosure.

Referring to FIG. 3, in the AI system 1, at least one of an AI server 200, a robot 100a, a self-driving vehicle 100b, an XR device 100c, a smartphone 100d, and a home appliance 100e is connected to a cloud network 10. Here, the robot 100a, the self-driving vehicle 100b, the XR device 100c, the smartphone 100d, or the home appliance 100e to which AI technology is applied may be referred to as AI device 100a to 100e.

The cloud network 10 may refer to a network that constitutes part of a cloud computing infrastructure or exists within a cloud computing infrastructure. Here, the cloud network 10 may be configured by using a 3G network, a 4G or Long Term Evolution (LTE) network, or a 5G network, etc.

That is, each device (100a to 100e, 200) constituting the AI system 1 may be connected to each other through the cloud network 10. In particular, each device (100a to 100e, 200) may communicate with each other through a base station, but may also communicate directly with each other without a base station.

The AI server 200 may include a server that performs AI processing and a server that performs operations on big data.

The AI server 200 is connected to at least one of the robot 100a, the self-driving vehicle 100b, the XR device 100c, the smartphone 100d, and the home appliance 100e which are the AI devices constituting the AI system 1, through the cloud network 10, and may assist at least some of the AI processing of the connected AI devices 100a to 100e.

At this time, the AI server 200 may train an artificial neural network according to a machine learning algorithm on behalf of the AI device 100a to 100e, and may directly store the learning model or transmit it to the AI device 100a to 100e.

At this time, the AI server 200 may receive input data from the AI device 100a to 100e, infer a result value for the received input data by using a learning model, and generate a response or control command based on the inferred result value and transmits it to the AI device 100a to 100e.

Alternatively, the AI devices 100a to 100e may infer a result value for the input data by using a learning model, and generate a response or control command based on the inferred result value.

Hereinafter, various embodiments of the AI device 100a to 100e to which the above-described technology is applied are described. Here, the AI device 100a to 100e shown in FIG. 3 may be seen as a specific embodiment of the AI device 100 shown in FIG. 1.

The XR device 100c may be implemented as an HMD, a HUD equipped in a vehicle, a television, a mobile phone, a smartphone, a computer, a wearable device, a home appliance, digital signage, a vehicle, a stationary robot, or a mobile robot, by applying AI technology.

The XR device 100c may obtain information related to surrounding space or real objects by analyzing 3D point cloud data or image data obtained through various sensors or from an external device to generate position data and attribute data for 3D points, and may render and output an XR object to be output. For example, the XR device 100c may output an XR object containing additional information related to the recognized object by matching the XR object to the recognized object.

The XR device 100c may perform the above operations by using a learning model composed of at least one artificial neural network. For example, the XR device 100c may recognize a real-world object in 3D point cloud data or image data by using a learning model, and may provide information corresponding to the recognized real-world object. Here, the learning model may be trained directly in the XR device 100c, or learned in an external device such as the AI server 200.

At this time, the XR device 100c may perform operation by generating a result by using the learning model directly, but it may also perform operation by transmitting sensor information to an external device such as the AI server 200 and receiving a consequently generated result.

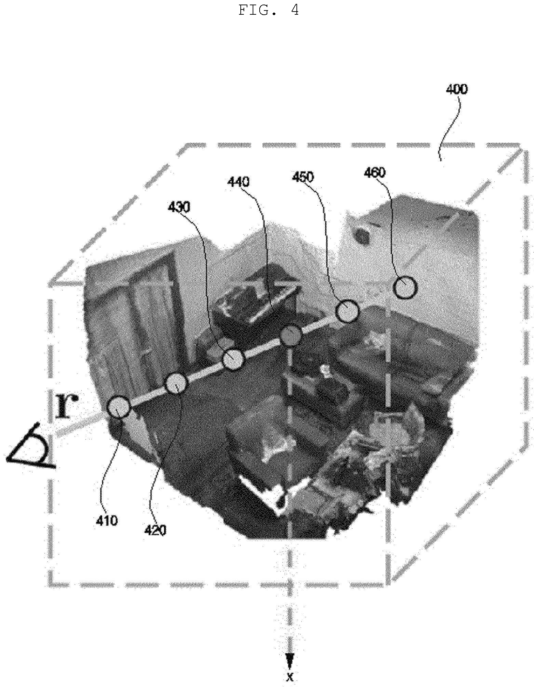

FIGS. 4 to 9 are diagrams for explaining a neural network model of an artificial intelligence device, according to an embodiment of the present disclosure.

Referring to FIG. 4, the AI device 100 may determine a plurality of sampling points 410 to 460 located on a ray that proceeds toward a certain direction from the center of focus o, with respect to a plurality of a multi-view image of an indoor space 400. For example, a gap between the plurality of sampling points 410 to 460 located on the ray(r) may be constant.

The sampling point located on the ray(r) may be calculated on the basis of the following Equation 1. Here, x may correspond to the position of the sampling point, o may correspond to the center of focus, and v may correspond to a unit direction vector of the ray(r). $x = p \left(t\right) = o + tv , t > 0$

The AI device 100 may calculate various values for the plurality of sampling points 410 to 460, on the basis of the position and direction of the plurality of sampling points 410 to 460. For example, the AI device 100 may calculate various values for the plurality of sampling points 410 to 460, by using a learning model corresponding to a neural network model with a multi-layer perceptron (MLP) structure.

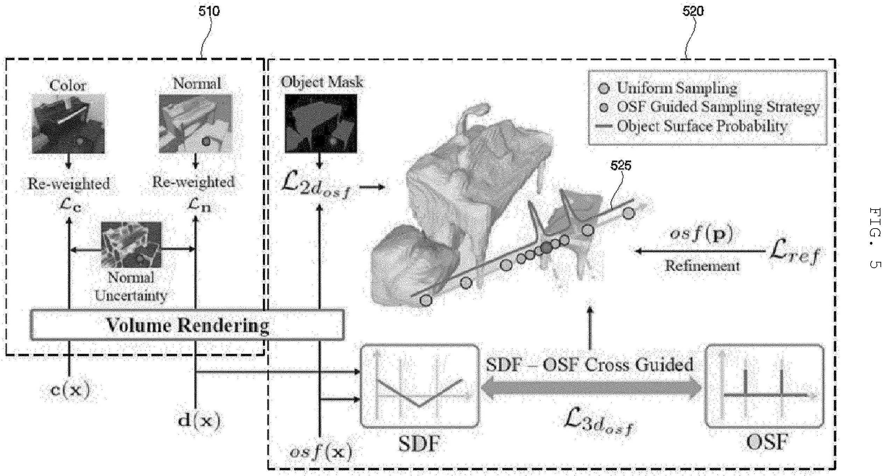

Referring to FIG. 5, the AI device 100 may perform a first step learning 510 for the layout of an indoor space. In this disclosure, the first step learning 510 may be understood as holistic surface learning.

The AI device 100 may calculate a signed distance function (SDF) value for sampling points. The SDF value may represent the shortest distance from each point in a space to the surface of an object. In this disclosure, the SDF value may be represented as d(x).

The AI device 100 may calculate a color value for sampling points. For example, the AI device 100 may calculate a color value, on the basis of the position of the sampling point, the direction, the spatial gradient of the SDF value, etc. Here, the spatial gradient of the SDF value may correspond to a surface normal. In the present disclosure, the color value may be represented as c(x).

The AI device 100 may apply various values for sampling points to a volume rendering formula.

According to the volume rendering formula of Equation 2 below, a color according to the ray(r) may be rendered. $\begin{matrix}\hat{C} \left(r\right) = {\sum }_{i = 1}^{N} {T}_{i} ⋅ {α}_{i} ⋅ c \left({x}_{i}, {v}_{i}\right) \\ {T}_{i} = {\prod }_{j = 1}^{i - 1} \left(1-{α}_{j}\right) \\ {α}_{i} = 1 - exp \left(-{\int }_{{t}_{i}}^{{t}_{i + 1}} ρ \left(t\right) dt\right)\end{matrix}$

Here, N may denote the number of sampling points located on the ray(r), Ti may denote the accumulated transmittance, and ρ(t) may denote an opaque density. The opaque density may be calculated on the basis of Equation 3 below. $\begin{matrix}ρ \left(x\right) = \frac{- \frac{{dΦ}_{s}}{d x} \left(d\left(x\right)\right)}{{Φ}_{s} \left(d\left(x\right)\right)} = - \frac{{se}^{- s ⋅ d \left(x\right)}}{1 + {e}^{- s ⋅ d \left(x\right)}} \\ {Φ}_{s} \left.\left(d\left(x\right)\right)\right) = \frac{1}{1 + {e}^{- s ⋅ d \left(x\right)}} \\ \frac{{dΦ}_{s}}{d x} \left(d\left(x\right)\right) = \frac{{se}^{- s ⋅ d \left(x\right)}}{{\left({e}^{- s ⋅ d \left(x\right)}+1\right)}^{2}}\end{matrix}$

Similarly, according to the volume rendering formula of Equation 4 below, a surface normal according to the ray(r) may be rendered. $\hat{n} \left(r\right) = {\sum }_{i = 1}^{N} {T}_{i} ⋅ {α}_{i} ⋅ n \left({x}_{i}\right)$

Meanwhile, while normal prior may provide accurate geometric guidance in a texture-free area, color image may provide incorrect guidance in a corresponding area due to a lack of visual features. On the other hand, in an area having fine detailed feature, if normal loss and color loss are applied uniformly to all pixels, discontinuities may occur in a planar area and detailed feature may become excessively smooth. Meanwhile, normal prior may be obtained by using a neural network that is previously trained in relation to normal prediction.

To solve these problems, the present disclosure may assign weights to normal loss and color loss by using normal uncertainty. Here, normal uncertainty may correspond to the accuracy of the predicted value for the surface normal obtained by using a neural network that is previously trained in relation to normal prediction.

Normal uncertainty may be calculated on the basis of the von Mises-Fisher (vonMF) distribution. The vonMF distribution is a probability distribution defined on a sphere, and may be defined as an n-sphere in n+1 dimensions. When n=2, the probability density function of the vonMF distribution may be expressed as shown in Equation 5 below.${p}_{vonMF , i} \left(\left.{n}_{i}\right|{μ}_{i},{κ}_{i}\right) = \frac{{κ}_{i} exp \left({κ}_{i}{μ}_{i}^{T}{n}_{i}\right)}{4 π sinh {κ}_{i}}$

Here, n denotes a unit vector, µ denotes a mean direction, and κ denotes a concentration parameter. A larger value of κ indicates that the distribution is concentrated around µ, and means that the uncertainty for a corresponding pixel is low.

Meanwhile, the Angular vonMF distribution may refer to a probability distribution obtained by transforming the vonMF distribution in angular space. While the general vonMF distribution, which is mainly defined on a sphere, deals with directional data of vectors, the Angular vonMF distribution may define a distribution by focusing on the angular difference between vectors. The probability density function of the Angular vonMF distribution may be expressed as shown in Equation 6 below. ${p}_{AngMF , i} \left(\left.{n}_{i}\right|{μ}_{i},{κ}_{i}\right) = \frac{\left({κ}_{i}^{2}+1\right) exp \left(-{κ}_{i}{cos}^{- 1}{μ}_{i}^{T}{n}_{i}\right)}{2 π \left(1+exp\left(-{κ}_{i}π\right)\right)}$

κ encodes the confidence of the network for the predicted µ, and to convert this into an intuitive quantity, the estimated value of the angle error may be calculated on the basis of Equation 7 below. In this case, the estimated value of the angle error may be used as a value corresponding to a normal uncertainty.$E \left[{cos}^{- 1}{μ}_{i}^{T}{n}_{i}\right] = \frac{2 {κ}_{i}}{{κ}_{i}^{2} + 1} + \frac{exp \left(-{κ}_{i}π\right) π}{1 + exp \left(-{κ}_{i}π\right)}$

Meanwhile, according to Equation 8 below, normal loss and color loss, which are weighted according to the normal uncertainty, may be calculated. $\begin{matrix}{L}_{n} = {\sum }_{r ∈ R} {\left‖\hat{n}\left(r\right)-n\left(r\right)\right‖}_{1} ⋅ \left({β}_{n}-{u}_{r}\right) \\ {L}_{c} = {\sum }_{r ∈ R} {\left‖\hat{C}\left(r\right)-C\left(r\right)\right‖}_{1} ⋅ \left({β}_{c}-{u}_{r}\right)\end{matrix}$

Here, βn and βc may denote trade-off hyperparameter, and µr may denote the normal uncertainty of the ray(r). That is, (βn-µr) is applied as a weight for normal loss, and (βc+µr) is applied as a weight for color loss.

When weight is applied based on normal uncertainty, a flat area having a low uncertainty, such as a layout of indoor space or a large object, is more influenced by normal than by color, so that a consistent and smooth plane can be created. In addition, a texture-rich area having a high uncertainty is more influenced by color, so that detailed feature can be preserved and sharpness can be maintained.

According to an embodiment, the Eikonal loss of Equation 9 below may be used to normalize the gradient of the SDF value. ${L}_{eik} = {\sum }_{i = 1}^{N} \frac{1}{N} {\left({\left‖∇d\left({x}_{i}\right)\right‖}_{2}-1\right)}^{2}$

Meanwhile, the AI device 100 may perform a second step learning 520 for an object within an indoor space. In this disclosure, the second step learning 520 may be understood as object surface learning.

The AI device 100 may calculate an object surface field (OSF) value for sampling points. Here, the OSF value may be understood as a value that instructs the SDF to encapsulate the small-scale geometry and high-frequency detail of an object while simultaneously maintaining the smoothness of the layout of the indoor space.

In this disclosure, the OSF value may be a value representing the probability that each spatial point corresponds to an object surface. At this time, according to the volume rendering formula of Equation 10 below, the OSF according to the ray(r) may be rendered. $osf \left(r\right) = {\sum }_{i = 1}^{N} {T}_{i} ⋅ {α}_{i} ⋅ osf \left({x}_{i}\right)$

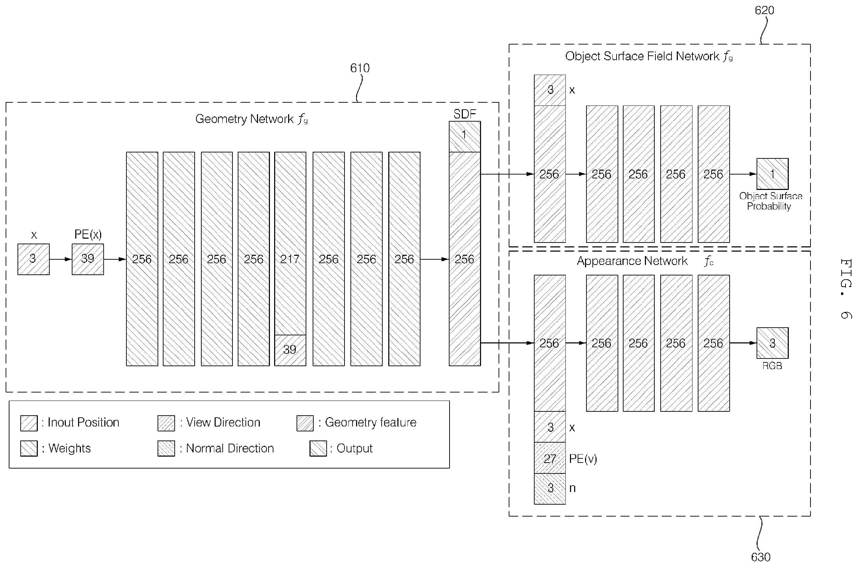

Referring to FIG. 6, a network architecture according to an embodiment of the present disclosure may include a geometry network 610, an OSF network 620, and an appearance network 630. A geometry feature calculated through the geometry network 610 may be used as an input value for the OSF network 620 and the appearance network 630. PE may mean a value mapped to positional encoding.

Referring again to FIG. 5, according to Equation 11 below, a 2D object surface loss may be calculated as an initial step of OSF learning. ${L}_{2 {d}_{osf}} = BCE \left(osf\left(r\right){, 1}_{o}\left(r\right)\right)$

Here, BCE is a binary cross-entropy loss, and 1o may denote an indicator function that returns 1 if an object surface exists along the ray(r), and 0 otherwise.

The AI device 100 may use a 2D object mask obtained by using a pre-trained 2D object prediction network as prior, in relation to the 2D object surface loss. The 2D object surface loss is used to minimize the discrepancy between the predicted OSF value of the ray(r) and the 2D object mask, thereby setting the initial value of the OSF.

Meanwhile, according to Equation 12 below, the 3D object surface loss may be calculated. $\begin{matrix}{L}_{3 {d}_{osf}} = \frac{1}{N} {\sum }_{i = 1}^{N} \left[{1}_{o}\left(r\right)⋅osf\left({x}_{i}\right)⋅\left|osf\left({x}_{i}\right)-{σ}_{γ}\left({x}_{i}\right)\right|+\left(1-{1}_{o}\left(r\right)\right)⋅osf\left({x}_{i}\right)\right] \\ {σ}_{γ} \left(x\right) = \frac{1}{1 + exp \left(γ⋅d\left(x\right)\right)}\end{matrix}$

Here, γ is a hyperparameter that determines the steepness of function, and N may denote the number of sampling points located on the ray(r). The 3D object surface loss may operate differently depending on whether an object surface exists along the ray(r). The 3D object surface loss may be configured such that the OSF adheres to the object surface of the SDF, and at the same time, effectively learns low probability in a non-object surface area.

When the ray(r) intersects with the object surface, the probability of the object surface may change according to the sign of the SDF. For example, while the ray(r) passes through a zero-level set of points where the SDF is zero, the object surface probability 525 may increase when the ray(r) enters and decrease when it exits.

In addition, since the OSF at all points located along the ray(r) should show a low probability when the ray(r) only intersects with the layout surface of the indoor space, the 3D object surface loss may be configured to prevent OSF activation on the layout surface of the indoor space. The 3D object surface loss may, in a multi-view environment, effectively reduce the OSF with respect to an indoor space layout as well as an enclosed space behind an object. Since the probability of the OSF is already reduced when the ray(r) intersects with the layout surface of the indoor space after colliding with an object surface, the OSF may not be affected by changes in the SDF.

According to one embodiment, the AI device 100 may use a certain refinement loss. The use of certain refinement loss is based on the consideration that the reliability of a point cloud extracted from a multi-view stereo (MVS) method is excellent in an area where visual feature is rich, but is inferior in an area where detailed feature is few, thereby improving the learning effect for the OSF through the use of the point cloud. The certain refinement loss may be defined on the basis of the following Equation 13. ${L}_{ref} = - \frac{1}{{N}_{i}} {\sum }_{{x}_{j} ∈ {P}_{i}} {1}_{o} \left({x}_{j}\right) ⋅ log \left(osf\left({x}_{j}\right)\right)$

Here, Ni denotes the number of points included in the point cloud Pi, and 1o(xⱼ) denotes an indicator function that returns a value of 1 or 0 depending on whether the input point belongs to the object surface. When using such a certain refinement loss, the performance of the OSF network may be improved to enable more accurate learning of complex object area having a thin structure and a high occlusion.

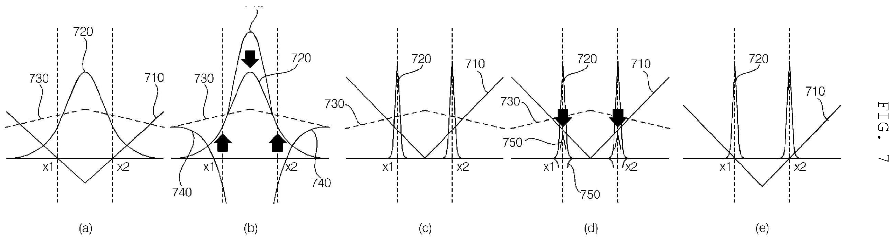

Meanwhile, according to the present disclosure, SDF and OSF may influence each other, thereby improving the performance of the learning model. The SDF may induce the OSF to train the surface of an object, and the trained OSF may induce the SDF to detect high-frequency geometric detail. In this regard, this will be explained with reference to FIG. 7.

FIG. 7 is a diagram for explaining a mutual influence between the OSF and the SDF according to an embodiment of the present disclosure.

Referring to FIG. 7A, a SDF 710 may have a value of 0 on the surface (x1, x2) of an object, a positive value outside the object, and a negative value inside the object.

During the initial step of object surface learning, the OSF 720 in an area (w = T•α) having a high rendering weight may be trained to converge to 1 due to the 2-D object surface loss. The initial OSF 720 may have a high value not only on the surface (x1, x2) of the object but also inside the object (x1 to x2).

Referring to FIG. 7B, the SDF 710 may induce the OSF 720 to learn the surface of the object. The influence of the gradient of the 3D object surface loss for the OSF 720 may be observed. In relation to the influence of the gradient of the 3D object surface loss, the value 740, which is the partial derivative of the 3D object surface loss with respect to the OSF value, may be calculated by referring to Equation 14 below. In relation to the influence of the gradient of the 3D object surface loss, $\frac{\partial {L}_{3 {d}_{osf}}}{\partial osf \left(x\right)}$ 740, which is the partial derivative of the 3D object surface loss with respect to the OSF value, can be calculated by referring to Equation 14 below. $\frac{\partial {L}_{3 {d}_{osf}}}{\partial osf \left(x\right)} = \left\{\begin{matrix}{σ}_{γ} \left(x\right) - 2 ⋅ osf \left(x\right) , & if osf \left(x\right) < {σ}_{y} \left(x\right) \\ 2 ⋅ osf \left(x\right) - {σ}_{γ} \left(x\right) , & otherwise\end{matrix}\right.$$\frac{\partial {L}_{3 {d}_{osf}}}{\partial osf \left(x\right)}$ 740 may have a negative value only near the surface of the object (x1, x2) where oy 730 is greater than osf 720 and is less than 2•osf 720. In an area where the SDF 710 indicates that the surface of the object is nearby, the OSF 720 is induced to have a high value, but the OSF 720 may not have been trained with respect to the surface of the object. Through the learning process, the OSF 720 is trained to decrease both inside and outside the object, and may increase only near the surface of the object. Consequently, the OSF 720 may be guided to show a high value only on the surface of the object.

Referring to FIG. 7C to E, a well-trained OSF 720 may be induced to train high-frequency detail that the SDF 710 has not yet captured. Considering cases such as when a ray(r) passes through a thin structure like a chair leg, the value $\frac{\partial {L}_{3 {d}_{osf}}}{\partial d \left(x\right)}$ 750, which is the partial derivative of the 3D object surface loss with respect to the SDF, may be calculated as a result as shown in Equation 15 below. $\frac{\partial {L}_{3 {d}_{osf}}}{\partial d \left(x\right)} = \left\{\begin{matrix}γ ⋅ osf \left(x\right) ⋅ {σ}_{γ} \left(x\right) ⋅ \left(1-{σ}_{γ}\left(x\right)\right) , & if {σ}_{γ} \left(x\right) < osf \left(x\right) \\ - γ ⋅ osf \left(x\right) ⋅ {σ}_{γ} \left(x\right) ⋅ \left(1-{σ}_{γ}\left(x\right)\right) , & otherwise\end{matrix}\right.$

The SDF 710 in an area where OSF 720 is high may be pulled in a negative direction when σγ 730 is smaller than osf 720. This loss generates a gradient for a thin structure to effectively solve a vanishing gradient problem. Through the Eikonal loss, the SDF may be trained to learn high-frequency detail while maintaining a gradient and a seamless shape.

Meanwhile, FIG. 7E may show the final results of the SDF 710 and the OSF 720.

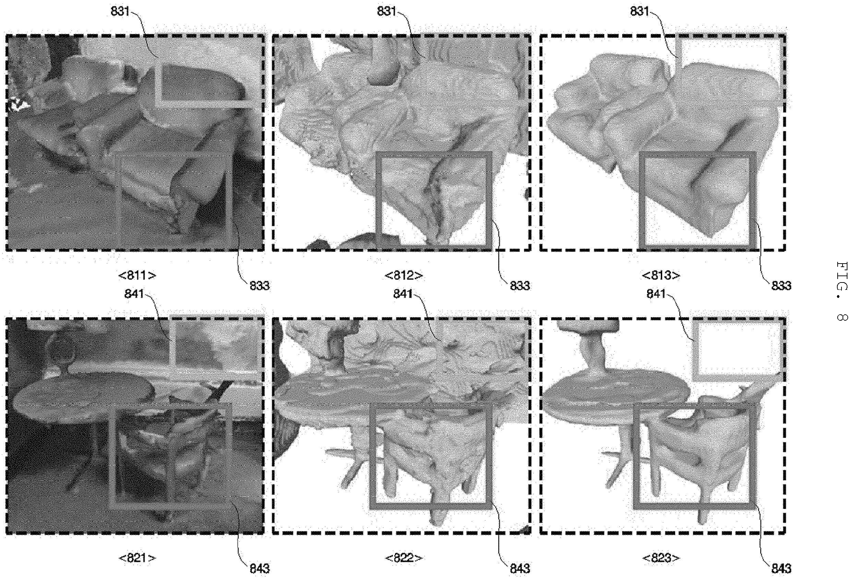

FIG. 8 is a diagram for explaining results according to the application of loss functions related to OSF, according to an embodiment of the present disclosure.

Referring to FIG. 8, results may be compared between a case where training is performed by using only 2D object surface loss and a case where training is performed by using 3D object surface loss as well.

Based on the image 811, 821 for ground truth, when comparing the image 812, 822 of the result using only 2D object surface loss with the image 813, 823 of the result using both 2D object surface loss and 3D object surface loss, it can be seen that the OSF accurately represents the boundary of an object when both 2D object surface loss and 3D object surface loss are used. This improvement may be observed on both non-object surface 831, 841 and object surface 833, 843.

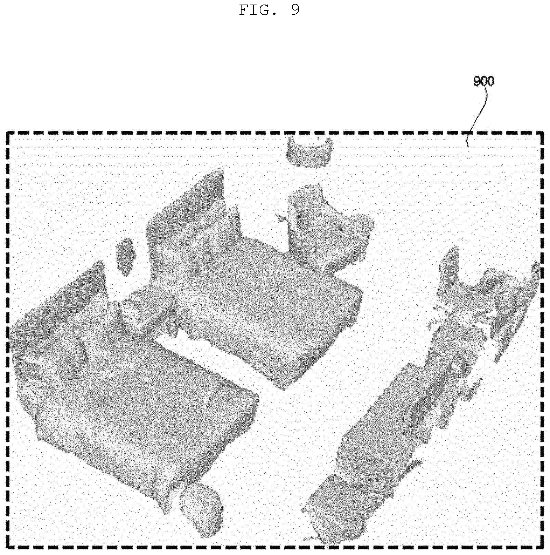

FIG. 9 is a diagram for explaining an object mesh extracted based on OSF, according to an embodiment of the present disclosure.

Referring to FIG. 9, according to an embodiment of the present disclosure, the AI device 100 may extract an object mesh by using an OSF-based filtering. To perform the OSF-based filtering, an intersection point of the SDF and the OSF may be calculated. At this time, the SDF is close to a zero-level set of 0 points, and the OSF may be greater than a specific threshold. In addition, the intersection point of the SDF is maintained intactly, and the remainder of the SDF may be filtered. Subsequently, the AI device 100 may extract an object mesh from the SDF by using a certain algorithm, for example, a Marching Cubes algorithm. Through this, reconstruction of 3D object may be easily achieved.

In summary, the learning step according to an embodiment of the present disclosure may include a first step learning 510 and a second step learning 520. The loss function at the first step learning 510 may be set to 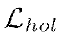 *=* λ_{c} · 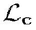 + λₙ · 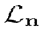 + λ*ₑᵢₖ ·* 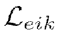 *,* and the loss function at the second step learning 520 may be set to 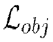 *= λ*₂*_{dosf} ·* 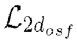 *+* λ₃*_{dosf} ·* 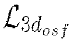 *+ λ_{ref} ·* 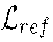 . In addition, the final loss function may be set to 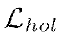 *+* 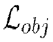 .

According to an embodiment, the AI device 100 may sample points on an indoor space by using the OSF.

According to a conventional method, importance sampling may be performed based on volume rendering weight (w=T•α) that may be derived from density. However, as unnecessary weight generated near the surface of an object located near the ray(r) is observed, unnecessary point may be sampled.

In contrast, according to an embodiment of the present disclosure, when an OSF is applied, the OSF may strictly train a SDF surface, and provide 3D supervision to a surface of object and an empty space. Thus, unnecessary weight in the empty space may be reduced.

Sampling probability may be calculated on the basis of w(x)•osf(x). Here, x denotes a spatial position. According to the method of applying OSF, the effect of OSF may be enhanced to sample points in the indoor space more densely in an area where both object surface probability and volume rendering weight are high. In particular, by focusing the learning process more on the OSF and SDF that cooperate to guide one another, the process where SDF captures high-frequency detail may be improved.

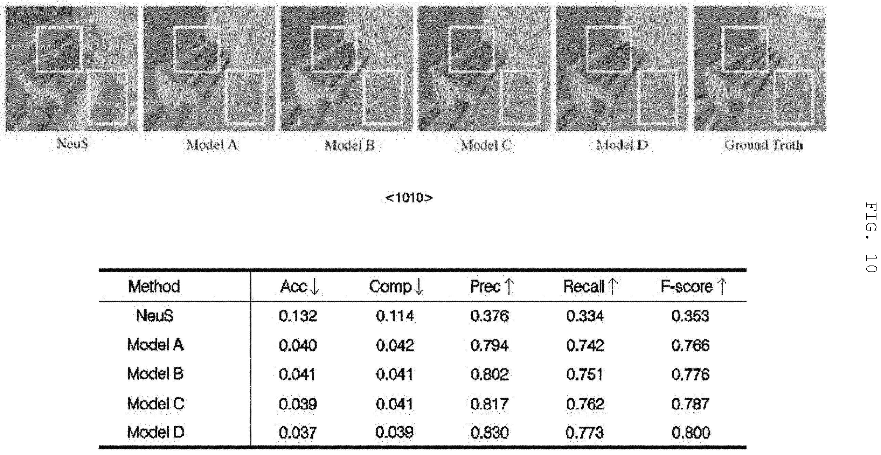

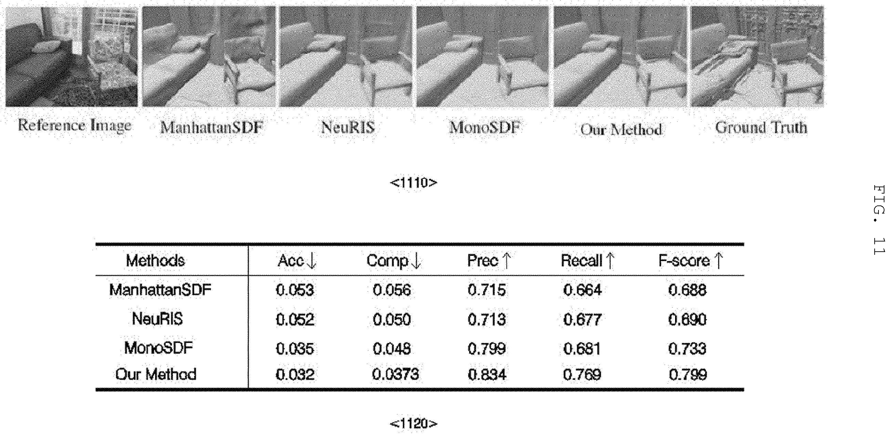

FIGS. 10 and 11 are diagrams for explaining the result of reconstructing a 3D indoor space of a neural network model of an artificial intelligence device, according to an embodiment of the present disclosure.

Referring to reference numeral 1010 in FIG. 10, the results of a 3D reconstruction of an indoor space may be seen for each of a conventional method NeuS, a case (Model A) of using only normal prior, a case (Model B) of performing a first step learning 510, a case (Model C) of performing a first step learning 510 and a second step learning 520, and a case (Model D) of sampling points on an indoor space by using OSF along with a first step learning 510 and a second step learning 520.

It can be seen that the case (Model B) of performing a first step learning 510 provides a smoother and more consistent layout surface of an indoor space in comparison with the case (Model A) of using only normal prior. In addition, in the case (Model C) of performing a first step learning 510 and a second step learning 520, it can be seen that detailed features within an object area, such as a stand placed on a piano and a chair leg, are captured more effectively. Furthermore, in the case (Model D) of sampling points on an indoor space by using OSF along with a first step learning 510 and a second step learning 520, it can be seen that the reconstruction of fine details, such as a music stand of piano, is successfully achieved.

Referring to reference numeral 1020 in FIG. 10, it may be seen that, according to a quantitative result for each case, the quality of the 3D reconstruction result is improved as it progresses toward the conventional method NeuS, the case (Model A) of using only normal prior, the case (Model B) of performing a first step learning 510, the case (Model C) of performing a first step learning 510 and a second step learning 520, and the case (Model D) of sampling points on an indoor space by using OSF along with a first step learning 510 and a second step learning 520.

Here, Acc denotes an accuracy which is a value of the ratio of accurate predictions made by a model in an entire dataset, Comp denotes a completeness which is a value on whether all data exist, Prec denotes a precision which is a value of the ratio of true positive predictions among all positive predictions made by the model, Recall denotes a recovery factor, which is a value of the ratio of true positive predictions among all actual positive cases, and F-score denotes a value calculated as a harmonic mean of a precision and a recall factor.

Meanwhile, referring to FIG. 11, according to various conventional methods and the embodiment of the present disclosure, the results of performing 3D reconstruction of an indoor space may be seen, and it may be seen that the prediction result according to the embodiment of the present disclosure has a superior performance in comparison with the prediction result according to various conventional methods.

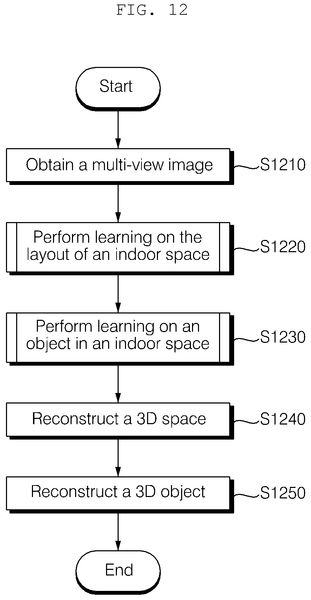

FIG. 12 is a flowchart illustrating the operation method of an artificial intelligence device, according to an embodiment of the present disclosure. Detailed descriptions of contents that overlap with those described in FIG. 1 to FIG. 11 will be omitted.

Referring to FIG. 12, the AI device 100 may obtain a multi-view image, at operation S1210. For example, the AI device 100 may receive a multi-view image through the communication unit 110, the input unit 120, etc.

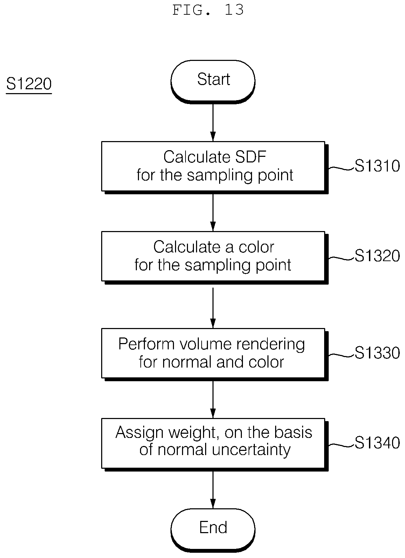

The AI device 100 may perform a first step learning on the layout of an indoor space, at operation S1220. In this regard, it will be explained with reference to FIG. 13.

Referring to FIG. 13, the AI device 100 may calculate a signed distance function (SDF) value for the sampling points, at operation S1310. The SDF value may indicate the shortest distance from each point in space to the surface of an object.

The AI device 100 may calculate a color value for the sampling points, at operation S1320. For example, the AI device 100 may calculate a color, on the basis of the position and direction of the sampling point, the spatial gradient of the SDF value, etc.

The AI device 100 may perform volume rendering for normal and color, at operation S1330. For example, the AI device 100 may perform volume rendering for color, on the basis of Equation 2. For example, the AI device 100 may perform volume rendering for normal, on the basis of Equation 4.

The AI device 100 may assign weight to normal loss and color loss, on the basis of normal uncertainty, at operation S1340.

The AI device 100 may perform a first step learning for the layout of an indoor space, on the basis of normal loss and color loss to which weight is assigned according to normal uncertainty.

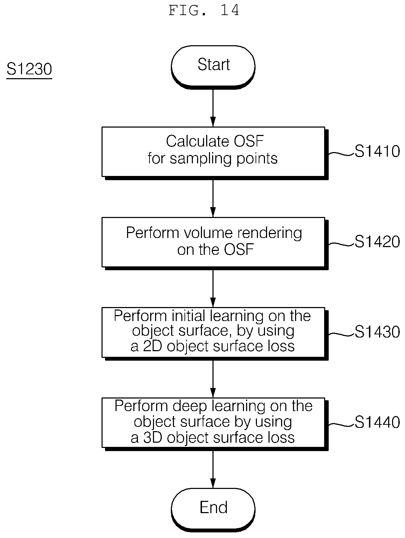

Referring again to FIG. 12, the AI device 100 may perform a second step learning on an object in an indoor space, at operation S1230. In this regard, it will be explained with reference to FIG. 14.

Referring to FIG. 14, the AI device 100 may calculate an object surface field (OSF) value for sampling points, at operation S1410. The OSF value may be a value indicating the probability of an object surface for each spatial point.

The AI device 100 may perform volume rendering on the OSF, at operation S1420. For example, the AI device 100 may perform volume rendering on the OSF, on the basis of Equation 10.

The AI device 100 may perform initial learning on the object surface by using a 2D object surface loss, at operation S1430. For example, the AI device 100 may perform initial learning on the object surface by using a 2D object mask obtained using a previously trained neural network as prior.

The AI device 100 may perform deep learning on the object surface by using a 3D object surface loss, at operation S1440. For example, the SDF may induce the OSF to learn the surface of object, and the learned OSF may induce the SDF to detect high-frequency geometric detail. For example, the AI device 100 may perform learning on the object surface, after sampling points on the indoor space by using the OSF.

Referring again to FIG. 12, an AI device 1240 may reconstruct the 3D indoor space, at operation S1240. The AI device 100 may reconstruct a 3D indoor space by using a learning model trained according to a first step learning on the layout of the indoor space and a second step learning on an object within the indoor space.

The AI device 1240 may reconstruct a 3D object, at operation S1250. The AI device 100 may reconstruct a 3D object, by extracting an object mesh by using OSF-based filtering.

As described above, according to at least one embodiment of the present disclosure, a 3D indoor space may be accurately reconstructed through a process consisting of a first step learning on the layout of the indoor space and a second step learning on an individual object.

In addition, according to at least one embodiment of the present disclosure, the accuracy of the learning in the first step may be improved by using normal uncertainty.

In addition, according to at least one embodiment of the present disclosure, the problem of vanishing gradient may be resolved by using an Object Surface Field (OSF).

Referring to FIGS. 1 to 14, an artificial intelligence device 100 according to one aspect of the present disclosure includes: a memory 170 which stores a learning model; and a processor 180 which trains the learning model, wherein the processor 180 calculates, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points, performs a first learning on a layout of the certain space of the certain learning model, on the basis of the color value and the SDF value, performs a second learning on an object included in the certain space of the certain learning model, on the basis of the SDF value and the OSF value, and reconstructs the certain space in three dimensions, on the basis of the certain learning model, wherein the SDF value corresponds to a shortest distance from a certain sampling point to a surface of an object included in the certain space, and the OSF value corresponds to a probability that the certain sampling point corresponds to the surface of an object included in the certain space.

In addition, according to an aspect of the present disclosure, the processor 180 calculates the SDF, on the basis of a position, direction, and surface normal of the sampling point.

In addition, according to an aspect of the present disclosure, the processor 180 calculates a normal uncertainty corresponding to an accuracy of a predicted value for the surface normal, and performs the first learning, by using a color loss corresponding to the color value to which a first weight corresponding to the normal uncertainty is applied, and a normal loss corresponding to the surface normal to which a second weight corresponding to the normal uncertainty is applied.

In addition, according to an aspect of the present disclosure, the processor 180 calculates the normal uncertainty corresponding to Equation 1 below based on a von Mises-Fisher (vonMF) distribution. $E \left[{cos}^{- 1}{μ}_{i}^{T}{n}_{i}\right] = \frac{2 {κ}_{i}}{{κ}_{i}^{2} + 1} + \frac{exp \left(-{κ}_{i}π\right) π}{1 + exp \left(-{κ}_{i}π\right)}$

Here, n is a unit vector, µ is a mean direction, and κ is a concentration parameter.

In addition, according to an aspect of the present disclosure, the first weight is a value obtained by adding the normal uncertainty to a first trade-off hyperparameter corresponding to the color value, and the second weight is a value obtained by subtracting the normal uncertainty from a second trade-off hyperparameter corresponding to the surface normal.

In addition, according to an aspect of the present disclosure, the processor 180, in performing the second learning, obtains a 2D object mask by using a previously learned 2D object prediction network, with respect to the multi-view image, and performs a learning on the certain learning model such that a discrepancy between the OSF value and the 2D object mask is minimized, on the basis of a 2D object surface loss corresponding to Equation 2 below. ${L}_{2 {d}_{osf}} = BCE \left(osf\left(r\right){, 1}_{o}\left(r\right)\right)$

Here, BCE is a binary cross-entropy loss, and 1o is an indicator function.

In addition, according to an aspect of the present disclosure, the processor 180, in performing the second learning, performs a learning on the certain learning model such that the SDF value and the OSF value influence each other, on the basis of a 3D object surface loss corresponding to Equations 3 and 4 below. ${L}_{3 {d}_{osf}} = \frac{1}{N} {\sum }_{i = 1}^{N} \left[{1}_{o}\left(r\right)⋅osf\left({x}_{i}\right)⋅\left|osf\left({x}_{i}\right)-{σ}_{γ}\left({x}_{i}\right)\right|+\left(1-{1}_{o}\left(r\right)\right)⋅osf\left({x}_{i}\right)\right]$ ${σ}_{γ} \left(x\right) = \frac{1}{1 + exp \left(γ⋅d\left(x\right)\right)}$

Here, γ is a hyperparameter that determines a steepness of function.

In addition, according to an aspect of the present disclosure, the processor 180 performs a learning on the certain learning model such that the SDF value influences the OSF value, on the basis of a partial derivative of the 3D object surface loss corresponding to Equation 5 below with respect to the OSF value. $\frac{\partial {L}_{3 {d}_{osf}}}{\partial osf \left(x\right)} = \left\{\begin{matrix}{σ}_{γ} \left(x\right) - 2 ⋅ osf \left(x\right) , & if osf \left(x\right) < {σ}_{γ} \left(x\right) \\ 2 ⋅ osf \left(x\right) - {σ}_{γ} \left(x\right) , & otherwise\end{matrix}\right.$

In addition, according to an aspect of the present disclosure, the processor 180 performs a learning on the certain learning model such that the OSF value influences the SDF value, on the basis of a partial derivative of the 3D object surface loss corresponding to Equation 6 below with respect to the SDF value. $\frac{\partial {L}_{3 {d}_{osf}}}{\partial d \left(x\right)} = \left\{\begin{matrix}γ ⋅ osf \left(x\right) ⋅ {σ}_{γ} \left(x\right) ⋅ \left(1-{σ}_{γ}\left(x\right)\right) , & if {σ}_{γ} \left(x\right) < osf \left(x\right) \\ - γ ⋅ osf \left(x\right) ⋅ {σ}_{γ} \left(x\right) ⋅ \left(1-{σ}_{γ}\left(x\right)\right) , & otherwise\end{matrix}\right.$

In addition, according to an aspect of the present disclosure, the processor 180 performs the second learning by using a point cloud extracted from a multi-view stereo (MVS) method, on the basis of a refinement loss corresponding to Equation 7 below. ${L}_{ref} = - \frac{1}{{N}_{i}} {\sum }_{{x}_{j} ∈ {P}_{i}} {1}_{o} \left({x}_{j}\right) ⋅ log \left(osf\left({x}_{j}\right)\right)$

Here, Ni is the number of points included in the point cloud, and 1o is an indicator function.

A method of operating an artificial intelligence device 100 according to an aspect of the present disclosure includes a data calculation operation of calculating, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points; a first learning operation of performing a learning on a layout of the certain space of the certain learning model, on the basis of the color value and the SDF value; a second learning operation of performing a learning on an object included in the certain space of the certain learning model, on the basis of the SDF value and the OSF value; and an operation of reconstructing the certain space in three dimensions, on the basis of the certain learning model, wherein the SDF value corresponds to a shortest distance from a certain sampling point to a surface of an object included in the certain space, and the OSF value corresponds to a probability that the certain sampling point corresponds to the surface of an object included in the certain space.

In addition, according to an aspect of the present disclosure, the data calculation operation includes an operation of calculating the SDF, on the basis of a position, direction, and surface normal of the sampling point.

In addition, according to an aspect of the present disclosure, the first learning operation includes: an operation of calculating a normal uncertainty corresponding to an accuracy of a predicted value for the surface normal; and an operation of performing a learning on the certain learning model, by using a color loss corresponding to the color value to which a first weight corresponding to the normal uncertainty is applied, and a normal loss corresponding to the surface normal to which a second weight corresponding to the normal uncertainty is applied.

In addition, according to an aspect of the present disclosure, the operation of calculating a normal uncertainty is an operation of calculating the normal uncertainty corresponding to Equation 1 below based on a von Mises-Fisher (vonMF) distribution. $E \left[{cos}^{- 1}{μ}_{i}^{T}{n}_{i}\right] = \frac{2 {k}_{i}}{{k}_{i}^{2} + 1} + \frac{exp \left(-{k}_{i}π\right) π}{1 + exp \left(-{k}_{i}π\right)}$

Here, n is a unit vector, µ is a mean direction, and κ is a concentration parameter.

In addition, according to an aspect of the present disclosure, the first weight is a value obtained by adding the normal uncertainty to a first trade-off hyperparameter corresponding to the color value, and the second weight is a value obtained by subtracting the normal uncertainty from a second trade-off hyperparameter corresponding to the surface normal.

In addition, according to an aspect of the present disclosure, the second learning operation includes: an operation of obtaining a 2D object mask by using a previously learned 2D object prediction network, with respect to the multi-view image; and an operation of performing a learning on the certain learning model such that a discrepancy between the OSF value and the 2D object mask is minimized, on the basis of a 2D object surface loss corresponding to Equation 2 below. ${L}_{2 {d}_{osf}} = BCE \left(osf\left(r\right){, 1}_{o}\left(r\right)\right)$

Here, BCE is a binary cross-entropy loss, and 1o is an indicator function.

In addition, according to an aspect of the present disclosure, the second learning operation includes an operation of performing a learning on the certain learning model such that the SDF value and the OSF value influence each other, on the basis of a 3D object surface loss corresponding to Equations 3 and 4 below. ${L}_{3 {d}_{osf}} = \frac{1}{{N}_{i}} {\sum }_{i = 1}^{N} \left[{1}_{o}\left(r\right)⋅osf\left({x}_{i}\right)⋅\left|osf\left({x}_{i}\right)-{σ}_{γ}\left({x}_{i}\right)\right|+\left(1-{1}_{o}\left(r\right)\right)⋅osf\left({x}_{i}\right)\right]$ ${σ}_{γ} \left(x\right) = \frac{1}{1 + exp \left(γ⋅d\left(x\right)\right)}$

Here, γ is a hyperparameter that determines a steepness of function.

In addition, according to an aspect of the present disclosure, the second learning operation includes an operation of performing a learning on the certain learning model such that the SDF value influences the OSF value, on the basis of a partial derivative of the 3D object surface loss corresponding to Equation 5 below with respect to the OSF value. $\frac{\partial {L}_{3 {d}_{osf}}}{\partial osf \left(x\right)} = \left\{\begin{matrix}{σ}_{γ} \left(x\right) - 2 ⋅ osf \left(x\right) , & if osf \left(x\right) < {σ}_{γ} \left(x\right) \\ 2 ⋅ osf \left(x\right) - {σ}_{γ} \left(x\right) , & otherwise\end{matrix}\right.$

In addition, according to an aspect of the present disclosure, the second learning operation includes an operation of performing a learning on the certain learning model such that the OSF value influences the SDF value, on the basis of a partial derivative of the 3D object surface loss corresponding to Equation 6 below with respect to the SDF value. $\frac{\partial {L}_{3 {d}_{osf}}}{\partial d \left(x\right)} = \left\{\begin{matrix}γ ⋅ osf \left(x\right) ⋅ {σ}_{γ} \left(x\right) ⋅ \left(1-{σ}_{γ}\left(x\right)\right) , & if {σ}_{γ} \left(x\right) < osf \left(x\right) \\ - γ ⋅ osf \left(x\right) ⋅ {σ}_{γ} \left(x\right) ⋅ \left(1-{σ}_{γ}\left(x\right)\right) , & otherwise\end{matrix}\right.$

In addition, according to an aspect of the present disclosure, the second learning operation includes an operation of performing a learning on the certain learning model, by using a point cloud extracted from a multi-view stereo (MVS) method, on the basis of a refinement loss corresponding to Equation 7 below. ${L}_{ref} = - \frac{1}{{N}_{i}} {\sum }_{{x}_{j} ∈ {P}_{i}} {1}_{o} \left({x}_{j}\right) ⋅ log \left(osf\left({x}_{j}\right)\right)$

Here, Ni is the number of points included in the point cloud, and 1o is an indicator function.

Since the accompanying drawings are merely for easily understanding embodiments disclosed herein, it should be understood that the technical concept disclosed herein is not limited by the accompanying drawings, and all changes, equivalents or substitutions are included in the concept and technical scope of the present disclosure.

Meanwhile, an operation method of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

Furthermore, although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical concept or scope of the present disclosure.

## Claims

1. An artificial intelligence device comprising:
a memory which stores a learning model; and
a processor which trains the learning model,
wherein the processor calculates, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points,
performs a first learning on a layout of the certain space of the certain learning model, on the basis of the color value and the SDF value,
performs a second learning on an object included in the certain space of the certain learning model, on the basis of the SDF value and the OSF value, and
reconstructs the certain space in three dimensions, on the basis of the certain learning model,
wherein the SDF value corresponds to a shortest distance from a certain sampling point to a surface of an object included in the certain space, and
the OSF value corresponds to a probability that the certain sampling point corresponds to the surface of an object included in the certain space.

2. The artificial intelligence device of claim 1, wherein the processor calculates the SDF, on the basis of a position, direction, and surface normal of the sampling point.

3. The artificial intelligence device of claim 2, wherein the processor calculates a normal uncertainty corresponding to an accuracy of a predicted value for the surface normal, and
performs the first learning, by using a color loss corresponding to the color value to which a first weight corresponding to the normal uncertainty is applied, and a normal loss corresponding to the surface normal to which a second weight corresponding to the normal uncertainty is applied.

4. The artificial intelligence device of claim 3, wherein the processor calculates the normal uncertainty corresponding to Equation 1 below based on a von Mises-Fisher (vonMF) distribution. $E \left[{cos}^{- 1} {μ}_{i}^{T}{n}_{i}\right] = \frac{2 {κ}_{i}}{{κ}_{i}^{2} + 1} + \frac{exp \left(-{κ}_{i}π\right) π}{1 + exp \left(-{κ}_{i}π\right)}$ Here, n is a unit vector, µ is a mean direction, and κ is a concentration parameter.

5. The artificial intelligence device of claim 3, wherein the first weight is a value obtained by adding the normal uncertainty to a first trade-off hyperparameter corresponding to the color value, and
the second weight is a value obtained by subtracting the normal uncertainty from a second trade-off hyperparameter corresponding to the surface normal.

6. The artificial intelligence device of claim 1, wherein the processor, in performing the second learning, obtains a 2D object mask by using a previously learned 2D object prediction network, with respect to the multi-view image, and
performs a learning on the certain learning model such that a discrepancy between the OSF value and the 2D object mask is minimized, on the basis of a 2D object surface loss corresponding to Equation 2 below. ${L}_{2 {d}_{osf}} = BCE \left(osf\left(r\right), {1}_{o}\left(r\right)\right)$
Here, BCE is a binary cross-entropy loss, and 1o is an indicator function.

7. The artificial intelligence device of claim 6, wherein the processor, in performing the second learning, performs a learning on the certain learning model such that the SDF value and the OSF value influence each other, on the basis of a 3D object surface loss corresponding to Equations 3 and 4 below. ${L}_{3 {d}_{osf}} = \frac{1}{N} {\sum }_{i = 1}^{N} \left[{1}_{o}\left(r\right)⋅osf\left({x}_{i}\right)⋅\left|osf\left({x}_{i}\right)-{σ}_{γ}\left({x}_{i}\right)\right|+\left(1-{1}_{o}\left(r\right)\right)⋅osf\left({x}_{i}\right)\right]$ ${σ}_{γ} \left(x\right) = \frac{1}{1 + exp \left(γ⋅d\left(x\right)\right)}$ Here, γ is a hyperparameter that determines a steepness of function.

8. The artificial intelligence device of claim 7, wherein the processor performs a learning on the certain learning model such that the SDF value influences the OSF value, on the basis of a partial derivative of the 3D object surface loss corresponding to Equation 5 below with respect to the OSF value. $\frac{\partial {L}_{3 {d}_{osf}}}{\partial osf \left(x\right)} = \left\{\begin{matrix}{σ}_{γ} \left(x\right) - 2 ⋅ osf \left(x\right) , & if osf \left(x\right) < {σ}_{γ} \left(x\right) \\ 2 ⋅ osf \left(x\right) - {σ}_{γ} \left(x\right) , & otherwise\end{matrix}\right.$

9. The artificial intelligence device of claim 7, wherein the processor performs a learning on the certain learning model such that the OSF value influences the SDF value, on the basis of a partial derivative of the 3D object surface loss corresponding to Equation 6 below with respect to the SDF value. $\frac{\partial {L}_{3 {d}_{osf}}}{\partial d \left(x\right)} = \left\{\begin{matrix}γ ⋅ osf \left(x\right) ⋅ {σ}_{γ} \left(x\right) ⋅ \left(1-{σ}_{γ}\left(x\right)\right) , & if {σ}_{γ} \left(x\right) < osf \left(x\right) \\ - γ ⋅ osf \left(x\right) ⋅ {σ}_{γ} \left(x\right) ⋅ \left(1-{σ}_{γ}\left(x\right)\right) , & otherwise\end{matrix}\right.$

10. The artificial intelligence device of claim 1, wherein the processor performs the second learning by using a point cloud extracted from a multi-view stereo (MVS) method, on the basis of a refinement loss corresponding to Equation 7 below. ${L}_{ref} = - \frac{1}{{N}_{i}} {\sum }_{{x}_{j} ∈ {P}_{i}} {1}_{o} \left({x}_{j}\right) ⋅ log \left(osf\left({x}_{j}\right)\right)$ Here, Ni is the number of points included in the point cloud, and 1o is an indicator function.

11. A method of operating an artificial intelligence device, the method comprising:
a data calculation operation of calculating, by using a certain learning model, a color value, a signed distance function (SDF) value, and an object surface field (OSF) value for a plurality of sampling points included in a certain space corresponding to a multi-view image, on the basis of at least one of positions and directions of the plurality of sampling points;
a first learning operation of performing a learning on a layout of the certain space of the certain learning model, on the basis of the color value and the SDF value;
a second learning operation of performing a learning on an object included in the certain space of the certain learning model, on the basis of the SDF value and the OSF value; and
an operation of reconstructing the certain space in three dimensions, on the basis of the certain learning model,
wherein the SDF value corresponds to a shortest distance from a certain sampling point to a surface of an object included in the certain space, and
the OSF value corresponds to a probability that the certain sampling point corresponds to the surface of an object included in the certain space.

12. The method of claim 11, wherein the data calculation operation comprises an operation of calculating the SDF, on the basis of a position, direction, and surface normal of the sampling point.

13. The method of claim 12, wherein the first learning operation comprises:
an operation of calculating a normal uncertainty corresponding to an accuracy of a predicted value for the surface normal; and
an operation of performing a learning on the certain learning model, by using a color loss corresponding to the color value to which a first weight corresponding to the normal uncertainty is applied, and a normal loss corresponding to the surface normal to which a second weight corresponding to the normal uncertainty is applied.

14. The method of claim 13, wherein the operation of calculating a normal uncertainty is an operation of calculating the normal uncertainty corresponding to Equation 1 below based on a von Mises-Fisher (vonMF) distribution. $E \left[{cos}^{- 1} {μ}_{i}^{T}{n}_{i}\right] = \frac{2 {κ}_{i}}{{κ}_{i}^{2} + 1} + \frac{exp \left(-{κ}_{i}π\right) π}{1 + exp \left(-{κ}_{i}π\right)}$ Here, n is a unit vector, µ is a mean direction, and κ is a concentration parameter.

15. The method of claim 13, wherein the first weight is a value obtained by adding the normal uncertainty to a first trade-off hyperparameter corresponding to the color value, and
the second weight is a value obtained by subtracting the normal uncertainty from a second trade-off hyperparameter corresponding to the surface normal.

16. The method of claim 11, wherein the second learning operation comprises:
an operation of obtaining a 2D object mask by using a previously learned 2D object prediction network, with respect to the multi-view image; and
an operation of performing a learning on the certain learning model such that a discrepancy between the OSF value and the 2D object mask is minimized, on the basis of a 2D object surface loss corresponding to Equation 2 below. ${L}_{2 {d}_{osf}} = BCE \left(osf\left(r\right){, 1}_{o}\left(r\right)\right)$
Here, BCE is a binary cross-entropy loss, and 1o is an indicator function.

17. The method of claim 16, wherein the second learning operation comprises an operation of performing a learning on the certain learning model such that the SDF value and the OSF value influence each other, on the basis of a 3D object surface loss corresponding to Equations 3 and 4 below. ${L}_{3 {d}_{osf}} = \frac{1}{N} {\sum }_{i = 1}^{N} \left[{1}_{o}\left(r\right)⋅osf\left({x}_{i}\right)⋅\left|osf\left({x}_{i}\right)-{σ}_{γ}\left({x}_{i}\right)\right|+\left(1-{1}_{o}\left(r\right)\right)⋅osf\left({x}_{i}\right)\right]$ ${σ}_{γ} \left(x\right) = \frac{1}{1 + exp \left(γ⋅d\left(x\right)\right)}$ Here, γ is a hyperparameter that determines a steepness of function.

18. The method of claim 17, wherein the second learning operation comprises an operation of performing a learning on the certain learning model such that the SDF value influences the OSF value, on the basis of a partial derivative of the 3D object surface loss corresponding to Equation 5 below with respect to the OSF value. $\frac{\partial {L}_{3 {d}_{osf}}}{\partial osf \left(x\right)} = \left\{\begin{matrix}{σ}_{γ} \left(x\right) - 2 ⋅ osf \left(x\right) , & if osf \left(x\right) < {σ}_{γ} \left(x\right) \\ 2 ⋅ osf \left(x\right) - {σ}_{γ} \left(x\right) , & otherwise\end{matrix}\right.$

19. The method of claim 17, wherein the second learning operation comprises an operation of performing a learning on the certain learning model such that the OSF value influences the SDF value, on the basis of a partial derivative of the 3D object surface loss corresponding to Equation 6 below with respect to the SDF value. $\frac{\partial {L}_{3 {d}_{osf}}}{\partial d \left(x\right)} = \left\{\begin{matrix}γ ⋅ osf \left(x\right) ⋅ {σ}_{γ} \left(x\right) ⋅ \left(1-{σ}_{γ}\left(x\right)\right) , & if {σ}_{γ} \left(x\right) < osf \left(x\right) \\ - γ ⋅ osf \left(x\right) ⋅ {σ}_{γ} \left(x\right) ⋅ \left(1-{σ}_{γ}\left(x\right)\right) , & otherwise\end{matrix}\right.$

20. The method of claim 11, wherein the second learning operation comprises an operation of performing a learning on the certain learning model, by using a point cloud extracted from a multi-view stereo (MVS) method, on the basis of a refinement loss corresponding to Equation 7 below. ${L}_{ref} = - \frac{1}{{N}_{i}} {\sum }_{{x}_{j} ∈ {P}_{i}} {1}_{o} \left({x}_{j}\right) ⋅ log \left(osf\left({x}_{j}\right)\right)$ Here, Ni is the number of points included in the point cloud, and 1o is an indicator function.
